# FASCICULE DE BREVET EUROPEEN

(11) **EP 1 591 962 B1**
(45) Date de publication et mention de la délivrance du brevet: **10.01.2007**
(21) Numéro de dépôt: 05290584.1
(22) Date de dépôt: 16.03.2005
(51) Int. Cl.: H04N 7/26, H04N 5/14, G06T 7/20

(54) **Procédé et dispositif de génération de vecteurs candidats pour les systèmes d'interpolation d'images par estimation et compensation de mouvement**
Verfahren und Anordnung zur Erzeugung von Kandidatenvektoren für Bildinterpolierungssysteme, die Bewegungsabschätzung und -kompensation verwenden
Method and device for generating candidate vectors for image interpolation systems using motion estimation and compensation

(30) Priorité: 30.03.2004 FR 0403307
(43) Date de publication de la demande: 02.11.2005
(73) Titulaire: STMicroelectronics SA, 92120 Montrouge (FR)
(72) Inventeur: Nicolas, Marina, 38120 Le Fontanil Cornillon (FR)
(74) Mandataire: Verdure, Stéphane

(56) Documents cités:
- EP-A- 1 128 678
- WO-A-00/14682
- WO-A-02/087210

## Description

La présente invention est relative au domaine de l'affichage séquentiel d'images, et plus précisément, aux procédés de traitement d'images pour l'encodage d'images ou l'insertion d'images, au sein d'une séquence d'images de type vidéo ou film.

Dans certains systèmes de traitement d'images vidéo ou film, le débit d'images (nombre d'images par seconde) est insuffisant pour un affichage de qualité. Par conséquent, des images supplémentaires sont générées via une fonction d'interpolation et affichées entre des images d'origine pour augmenter le débit d'images et améliorer la qualité de l'affichage. Une fonction d'interpolation de ce type calcule classiquement la valeur des pixels d'une image interpolée en fonction notamment de la valeur des pixels de l'image d'origine précédente et/ou de la valeur des pixels de l'image d'origine suivante.

Une telle fonction d'interpolation est basée sur la corrélation qui existe entre des images successives d'une vidéo ou d'un film. En effet, dans une séquence d'images vidéo, des sujets qui se déplacent apparaissent généralement dans des zones différentes respectives de plusieurs images consécutives. On génère donc des images interpolées à partir de parties d'images d'origine précédentes et/ou suivantes.

Une image est classiquement divisée en blocs de pixels et on fait l'hypothèse que chaque bloc se retrouve sensiblement à l'identique d'une image à l'autre même s'il y a eu un mouvement de ce bloc entre deux images. De ce fait, une image est interpolée à partir d'images d'origine en recherchant pour chaque bloc courant de l'image en cours d'interpolation, celui des blocs d'une image d'origine précédente et/ou d'une image d'origine suivante qui est le plus probable.

Des procédés d'estimation et/ou de compensation de mouvement proposent des méthodes de recherche de blocs ainsi adaptés pour la génération d'images interpolées. Une corrélation entre les parties des images consécutives où un objet en déplacement apparaît, peut en effet s'exprimer via un vecteur de mouvement. Ce dernier représente le mouvement d'un bloc de pixels d'une image à l'autre. Il a une composante verticale et une composante horizontale, représentant le déplacement qui doit être appliqué à un bloc d'une image précédente pour arriver à la position d'un bloc de pixels sensiblement identique dans une image suivante.

De tels procédés sont classiquement utilisés dans des systèmes de compression de données vidéo, comme par exemple des systèmes basés sur la norme MPEG. De tels systèmes permettent de réduire la quantité des données d'image à transmettre ou à mémoriser en compressant ces données afin de permettre leur transfert rapide sur des réseaux numériques ou encore des lignes téléphoniques ou leur enregistrement sur des médias numériques. Par conséquent, seules certaines images de référence sont codées et transmises puis, côté réception, les images intermédiaires manquantes sont interpolées en fonction des vecteurs de mouvement transmis avec les images codées.

Dans de tels systèmes, côté émission, on traite l'image intermédiaire afin de transmettre le moins d'informations possibles, comme cela est dit ci-dessus. Ainsi, l'image intermédiaire est divisée en blocs. Pour chaque bloc, une corrélation est calculée entre le bloc courant et une sélection de blocs candidats d'une image d'origine ou déjà traitée précédente et/ou suivante. Ce calcul de corrélation fournit une erreur relative à chaque bloc candidat. Un bloc candidat est élu pour représenter le bloc courant de l'image intermédiaire. Le bloc candidat élu est celui qui présente la plus grande corrélation avec le bloc courant, ou encore l'erreur la plus faible. Afin de permettre l'interpolation des images intermédiaires côté réception, l'image traitée est transmise via les informations suivantes qui sont généralement émises relativement à un bloc courant d'une image à interpoler :
- une indication du bloc candidat élu ;
- un vecteur de mouvement représentant une translation du bloc candidat élu vers la position du bloc courant ;
- une erreur fournie par le calcul de corrélation.

Ainsi, côté réception, les images traitées manquantes sont interpolées sur la base des informations reçues avec les images codées et une valeur des pixels de chaque bloc de ces images est ainsi déterminée.

Certains systèmes d'affichage d'images entrelacées utilisent également des procédés d'estimation et/ou de compensation de mouvement.

Des dispositifs de conversion de débit d'images mettent aussi en oeuvre de tels procédés. En effet ces dispositifs permettent d'augmenter un débit d'images d'origine en générant des images supplémentaires par interpolation des images d'origine. Ces dispositifs sont classiquement utilisés pour adapter des débits d'images entre un système de génération, codage, transmission et/ou stockage d'images d'une part, et un système d'affichage d'images d'autre part, qui impliquent des débits d'images différents.

Dans ce cas, l'image à interpoler est divisée en blocs. Pour chacun des blocs, une génération de vecteurs candidats est généralement effectuée. A chacun des vecteurs candidats, un bloc dans l'image d'origine précédente et un bloc dans l'image d'origine suivante correspondants à une translation de la position du bloc courant relative au vecteur candidat sont sélectionnés, puis un calcul de corrélation entre le bloc sélectionné de l'image précédente et le bloc sélectionné de l'image suivante est effectué. Le vecteur candidat élu est le vecteur pour lequel on calcule la plus grande corrélation. Le bloc courant est alors interpolé à partir du bloc dans l'image d'origine précédente et du bloc dans l'image d'origine suivante associés au vecteur candidat élu. On obtient ainsi la génération d'images par interpolation.

Les termes « image traitée » font référence à des images divisées en une pluralité de blocs pour lesquels un vecteur de mouvement a été élu. Ainsi, par interpolation des images traitées, on génère des images interpolées.

Le document EP 1 128 678 A1 divulgue un procédé d'estimation de mouvement pour des applications vidéo. A chaque bloc d'image est associé un vecteur de mouvement que l'on détermine à partir des vecteurs de mouvement d'un nombre limité de blocs voisins (spatialement et temporellement).

La section suivante présente des notions de base classiquement utilisées dans des procédés d'estimation de mouvement. On distingue communément plusieurs types d'images : des images d'origine de type I (Intra) qui sont codées sans référence à d'autres images, des images de type P (Prédictives) qui sont interpolées via un algorithme d'estimation de mouvement sur la base d'une image d'origine précédente, et des images de type B (Bidirectionnelles) qui sont interpolées via un algorithme d'estimation de mouvement sur la base d'une image d'origine précédente et d'une image d'origine suivante.

Comme décrit précédemment, une estimation de mouvement repose sur l'hypothèse qu'un bloc de pixels de l'image en cours de traitement, peut être modélisé en tant que translation d'un bloc de l'image d'origine précédente et/ou suivante. Par conséquent, chaque bloc courant de l'image en cours de traitement est normalement généré à partir d'un bloc de l'image d'origine précédente et/ou suivante. On suppose donc que chaque pixel d'un même bloc subit sensiblement la même translation. Les vecteurs de mouvements représentent cette information de translation. Par conséquent, un vecteur de mouvement est associé à chacun des blocs d'une image traitée et de ce fait, en appliquant aux blocs de l'image d'origine précédente et/ou aux blocs de l'image d'origine suivante une translation correspondant respectivement aux vecteurs de mouvement associés, on obtient une image interpolée.

Une difficulté de tels procédés est de rechercher pour chacun des blocs d'une image courante à interpoler le/les blocs de l'image précédente et/ou suivante les mieux adaptés parmi un ensemble de blocs candidats. A cet effet, les procédés d'estimation du mouvement sont classiquement basés sur des techniques de mise en correspondance des blocs dans lesquelles un vecteur de mouvement est obtenu par la réduction d'une fonction de coût mesurant la différence entre les blocs mis en correspondance.

Pour chaque bloc donné de l'image en cours de traitement, une technique de recherche de mouvement est réalisée pour déterminer où se trouve ce bloc dans l'image d'origine précédente et/ou l'image d'origine suivante. Puis le plus adapté des blocs de l'image précédente et/ou suivante est élu. Ceci est basé sur l'hypothèse que chaque bloc se retrouve sensiblement à l'identique d'une image à l'autre comme cela a été dit précédemment.

On connaît ainsi une technique basée sur un algorithme de recherche complète (en anglais, « full search ») selon laquelle on sélectionne un ensemble de blocs dans l'image d'origine précédente et/ou dans l'image d'origine suivante qui se trouvent à l'intérieur d'une fenêtre de dimensions déterminées centrée sur ledit bloc, et qui est appelée fenêtre de recherche. Une corrélation est calculée pour chacun des blocs de la fenêtre de recherche de l'image d'origine précédente et/ou suivante. On sélectionne le bloc donnant la meilleure corrélation (ou encore la plus petite erreur).

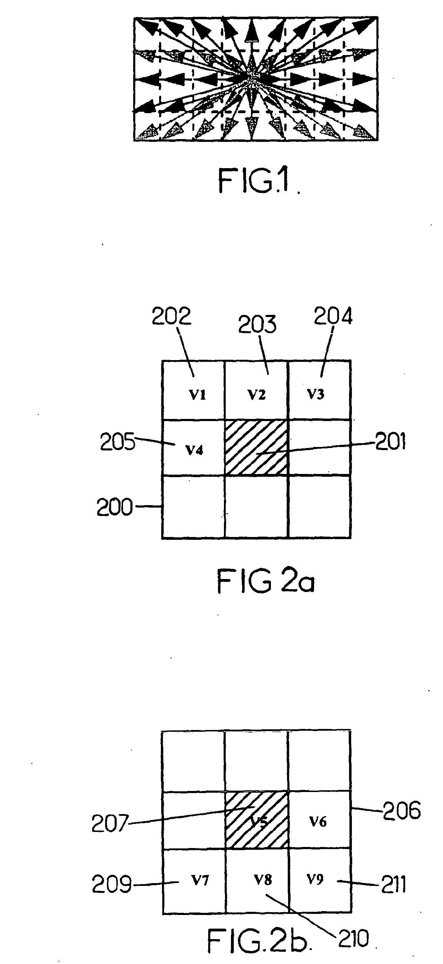

La figure 1 illustre une telle recherche appliquée à une fenêtre de recherche dont les dimensions sont de 8 blocs sur 4 blocs.

Un inconvénient majeur de ce principe est le nombre de calculs à exécuter et ce d'autant plus que la fenêtre de recherche est de grande taille.

D'autres techniques de recherche fournissent une estimation de mouvement en fonction d'informations respectivement associées aux blocs d'une image traitée précédente et/ou aux blocs de l'image en cours de traitement, afin d'obtenir une estimation de mouvement de chacun des blocs courants de l'image en cours de traitement Dans ce type de procédé, on associe un vecteur de mouvement à chacun des blocs des images traitées et on mémorise ces vecteurs de mouvement pour servir lors du traitement de l'image suivante à traiter.

A cet effet, on définit classiquement deux types de vecteurs de mouvement :
- des vecteurs de mouvement spatiaux, représentant une corrélation spatiale, c'est à dire représentant le mouvement de blocs voisins dans l'image en cours de traitement; et
- des vecteurs de mouvement temporels, représentant une corrélation temporelle, c'est à dire représentant le mouvement de blocs quelconque dans l'image traitée précédente.

On connaît des procédés qui proposent de réduire la quantité des calculs relatifs à la recherche de blocs adaptés pour le traitement d'une image en sélectionnant des vecteurs de mouvement candidats dans une fenêtre de recherche. Le calcul de corrélation n'est effectué que pour ces vecteurs candidats sélectionnés. Ainsi, en limitant le nombre de vecteurs de mouvement candidats on réduit le nombre de calculs de corrélation nécessaire. De ce fait, l'élection d'un vecteur de mouvement pour un bloc courant d'une image en cours de traitement est moins coûteuse.

Certains procédés proposent une sélection de vecteurs de mouvement candidats basée sur un critère lié à la position relative de blocs de l'image traitée précédente par rapport à la position du bloc courant dans l'image en cours de traitement. Ainsi, on sélectionne des vecteurs de mouvement candidats uniquement en ce qu'ils sont associés à des blocs jugés pertinents en raison de leur position.

Par ailleurs, on considère que le mouvement d'un bloc est sensiblement équivalent au mouvement d'un bloc voisin. De ce fait, en général, on sélectionne en outre des vecteurs de mouvement candidats spatiaux c'est-à-dire des vecteurs de mouvement qui ont déjà été associés à des blocs de pixels voisins dans l'image en cours de traitement.

Ce type de procédé présente le risque de sélectionner un ensemble de vecteurs candidats non pertinents pour un bloc courant donné et de ce fait d'élire un vecteur de mouvement parmi un ensemble de vecteurs de mouvement candidats qui peut ne pas être pertinent pour un bloc courant. En effet, la sélection des vecteurs de mouvement candidats est réalisée selon une règle fixe liée à la position des blocs par rapport au bloc courant : elle est donc faite indépendamment de la réelle pertinence des blocs par rapport au bloc courant.

Les figures 2a et 2b illustrent une sélection de vecteurs de mouvement candidats de ce type, dans une fenêtre de recherche autour d'un bloc courant 201 d'une image en cours de traitement 200 (figure 2a). La fenêtre de recherche correspondante dans l'image traitée précédente porte la référence 206 (figure 2b). On sélectionne des blocs candidats pour le bloc courant 201 en fonction de leur position relative par rapport au bloc courant. Ainsi, les blocs 202, 203, 204 et 205 de l'image traitée courante et les blocs 207, 208, 209, 210 et 211 de l'image traitée précédente sont sélectionnés. Les vecteurs de mouvement candidats sélectionnés pour le bloc courrant 201 sont par conséquent les vecteurs de mouvement V1, V2, V3, V4, V5, V6, V7, V8 et V9 respectivement associés aux blocs 202, 203, 204, 205, 207, 208, 209, 210 et 211.

La sélection des vecteurs candidats obéit à une règle fixe. Dans de telles circonstances, la sélection amène à des performances relativement faibles, notamment lorsque le bloc de pixels courant correspond dans l'image en cours de traitement à la frontière d'un objet en mouvement.

Or, la performance des dispositifs d'estimation et/ou de compensation de mouvement est grandement dépendante de la qualité de la sélection des vecteurs de mouvement candidats. En effet, une sélection performante de vecteurs de mouvement candidats permet de réduire le nombre de calculs de corrélation qui est égal au nombre de vecteur de mouvement candidats sélectionnés. Par conséquent il est souhaitable de disposer d'une méthode de sélection de vecteurs candidats qui soit efficace. D'un autre côté, cette sélection doit être réalisée au moyen de règles de sélection qui restent simples.

La présente invention vise à satisfaire ces besoins en proposant une méthode de génération des vecteurs de mouvement candidats à partir de vecteurs de mouvement sélectionnés en fonction d'un critère de qualité relatif aux vecteurs de mouvement. De ce fait, la présente invention offre un compromis entre une génération efficace au moyen de règles de sélection relativement rapides et faciles à mettre en oeuvre et une bonne qualité des images.

Un premier aspect de l'invention propose ainsi un procédé d'estimation de mouvement pour traiter des images destinées à s'insérer chacune entre une image d'origine précédente et une image d'origine suivante dans une séquence d'images déterminées, chaque image étant divisée en une pluralité de blocs de pixels, un vecteur de mouvement étant associé à chacun des blocs de pixels d'une image traitée, le procédé comprenant pour un bloc courant d'une image en cours de traitement, les étapes suivantes:
- sélection de vecteurs de mouvement associés à des blocs de pixels respectifs de l'image en cours de traitement et de vecteurs de mouvement associés à des blocs de pixels respectifs d'une image traitée précédente, respectivement appelés vecteurs de mouvement spatiaux et vecteurs de mouvement temporels ;
- génération de vecteurs de mouvement candidats à partir desdits vecteurs de mouvement sélectionnés ;
- élection d'un vecteur de mouvement parmi lesdits vecteurs de mouvement candidats;
- mémorisation d'une association dudit vecteur de mouvement élu au bloc de pixels courant;
suivant lequel un vecteur de mouvement temporel n'est sélectionné que si il satisfait un critère de sélection déterminé basé sur l'orientation dudit vecteur de mouvement.

Un second aspect de l'invention propose un dispositif d'estimation de mouvement pour traiter des images destinées à s'insérer chacune entre une image d'origine précédente et une image d'origine suivante dans une séquence d'images déterminées, chaque image étant divisée en une pluralité de blocs de pixels, un vecteur de mouvement étant associé à chacun des blocs de pixels d'une image traitée, le dispositif comprenant pour un bloc courant d'une image en cours de traitement:
- une unité de sélection pour sélectionner des vecteurs de mouvement associés à des blocs de pixels respectifs de l'image en cours de traitement et de vecteurs de mouvement associés à des blocs de pixels respectifs d'une image traitée précédente, respectivement appelés vecteurs de mouvement spatiaux et vecteurs de mouvement temporels ;
- une unité de génération pour générer des vecteurs de mouvement candidats à partir desdits vecteurs de mouvement sélectionnés ;
- une unité d'élection pour élire un vecteur de mouvement parmi lesdits vecteurs de mouvement candidats;
- une mémoire pour mémoriser une association dudit vecteur de mouvement élu au bloc de pixels courant;
dans lequel un vecteur de mouvement temporel n'est sélectionné que si il satisfait un critère de sélection déterminé basé sur l'orientation dudit vecteur de mouvement.

Un troisième aspect de l'invention propose un produit « programme d'ordinateur » chargeable directement dans la mémoire interne d'un ordinateur numérique, comprenant des portions de code de logiciel pour l'exécution des étapes du procédé selon le premier aspect lorsque ledit programme est exécuté dans l'ordinateur.

D'autres aspects, buts et avantages de l'invention apparaîtront à la lecture de la description d'un de ses modes de réalisation.

L'invention sera également mieux comprise à l'aide des dessins, sur lesquels :
- la figure 1 qui a déjà été commentée illustre une technique de sélection de vecteurs de mouvement basée sur un algorithme de recherche complète ;
- les figures 2a et 2b qui ont déjà été commentées illustrent une technique de sélection de vecteurs de mouvement candidats en fonction de la position des blocs de pixels correspondant relativement au bloc courant ;
- la figure 3 illustre un organigramme correspondant à la génération de vecteurs de mouvement candidats de l'image en cours de traitement selon un mode de mise en oeuvre de la présente invention;
- les figures 4a à 4f illustrent la génération de vecteurs de mouvement candidats de l'image en cours de traitement selon un mode de mise en oeuvre de la présente invention;
- la figure 5a et la figure 5b illustrent une technique de génération de vecteurs de mouvement candidat de l'image en cours de traitement selon un mode de mise en oeuvre de la présente invention;
- la figure 6 illustre une technique de génération de vecteurs de mouvement candidats de l'image en cours de traitement parmi des vecteurs de mouvements temporels selon un mode de mise en oeuvre de l'invention.

Dans tous les modes de mise en oeuvre de la présente invention, on réalise, pour certains au moins des blocs de pixels de l'image en cours de traitement (ci-après le bloc courant), une génération de vecteurs de mouvement candidats à partir de vecteurs de mouvement sélectionnés parmi des vecteurs de mouvement spatiaux (ci-après vecteurs spatiaux) et parmi des vecteurs de mouvement temporels (ci-après vecteurs temporels).

On notera que les termes « génération de vecteur candidat à partir de vecteurs de mouvement » font référence au fait que les vecteurs candidats peuvent être différents des vecteurs de mouvements sélectionnés. En effet, les vecteurs de mouvement sélectionnés, spatiaux ou temporels, peuvent être adaptés pour la génération de vecteurs candidats permettant d'optimiser la performance de tels procédés de traitement d'images.

Des vecteurs spatiaux candidats sont pertinents quand ils sont associés à un bloc de pixels qui représente le même objet que le bloc courant. Un bloc qui correspond à la bordure de l'objet présente un vecteur spatial associé qui est de ce fait moins pertinent. Afin de faire converger l'estimation de mouvement et de garantir une certaine homogénéité dans une séquence d'image il est en tout cas habituel de sélectionner des vecteurs de mouvement spatiaux.

La sélection de vecteurs spatiaux est de préférence réalisée en fonction de la position des blocs de pixels de l'image en cours de traitement relativement au bloc courant. Ainsi, on sélectionne en tant que vecteurs de mouvements candidats des vecteurs spatiaux associés à des blocs de l'image en cours de traitement qui sont déterminés par leur position relative au bloc courant.

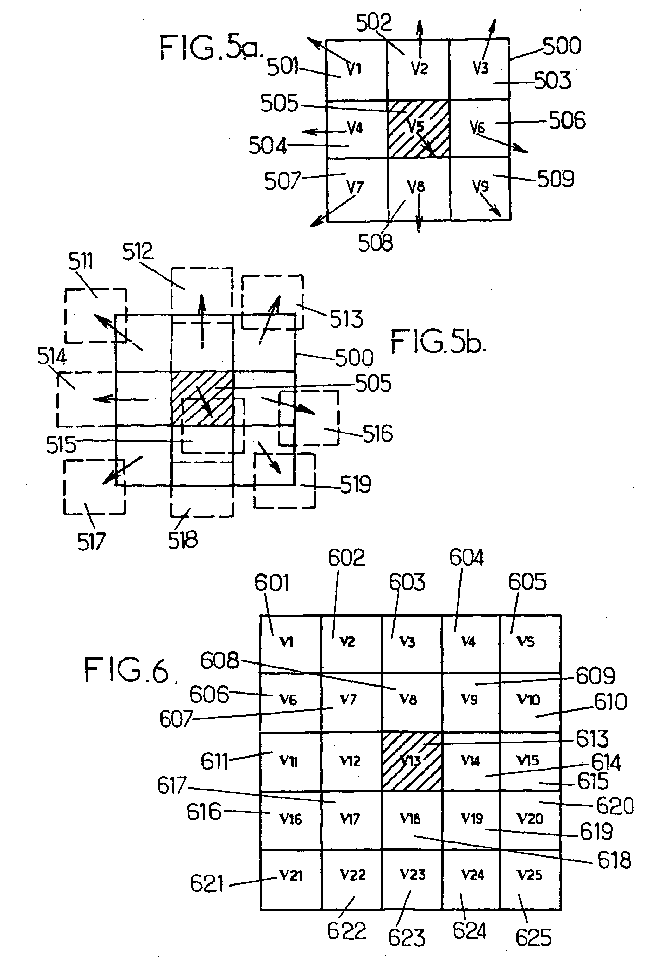

Par ailleurs, on sélectionne aussi des vecteurs temporels. De préférence, un ensemble de vecteurs temporels est au préalable déterminé en fonction de critères simples. On peut facilement déterminer un tel ensemble de vecteurs de mouvements temporels en définissant une fenêtre de recherche dont les dimensions sont de N blocs sur M blocs, où N et M sont des nombres entiers, et qui entoure la position correspondante au bloc courant dans l'image traitée précédente. La figure 6 illustre un tel ensemble de blocs de pixels appartenant à l'image traitée précédente. La position correspondant au bloc courant dans l'image traitée précédente 613 est située au centre de l'ensemble de blocs formé par les 25 blocs 601-625. Des vecteurs de mouvement V1-V25 sont respectivement associés aux blocs 601-625.

Parmi cet ensemble de vecteurs temporels, on sélectionne des vecteurs de mouvement candidats en fonction d'un critère de sélection relatif à leur orientation respective.

Dans un mode de mise en oeuvre préféré de l'invention, on ne sélectionne que les vecteurs temporels qui rapprochent du bloc courant les blocs de pixels auxquels ils sont respectivement associés. Ainsi, uniquement des vecteurs temporels orientés en direction du bloc courant sont sélectionnés pour générer des vecteurs candidats. De tels vecteurs de mouvement temporels sont jugés pertinents au sens de la présente invention.

Afin de limiter les calculs appliqués à chacun des vecteurs de mouvements candidats pour élire le plus adaptés des vecteurs de mouvement candidats, il est intéressant de déterminer un nombre fixe de vecteurs de mouvements candidats, ce nombre fixe étant déterminé afin de satisfaire un compromis entre une bonne qualité des images obtenues par interpolation (à partir d'images traitées pour l'encodage ou pour convertir un débit d'images) et une quantité de calculs limitée.

A cet effet, dans un mode de mise en oeuvre de l'invention, on génère un nombre déterminé Q de vecteurs de mouvement candidats, où Q est très largement inférieur au nombre total de blocs de pixels d'une image (en considérant des blocs de pixels de taille fixe pour simplifier).

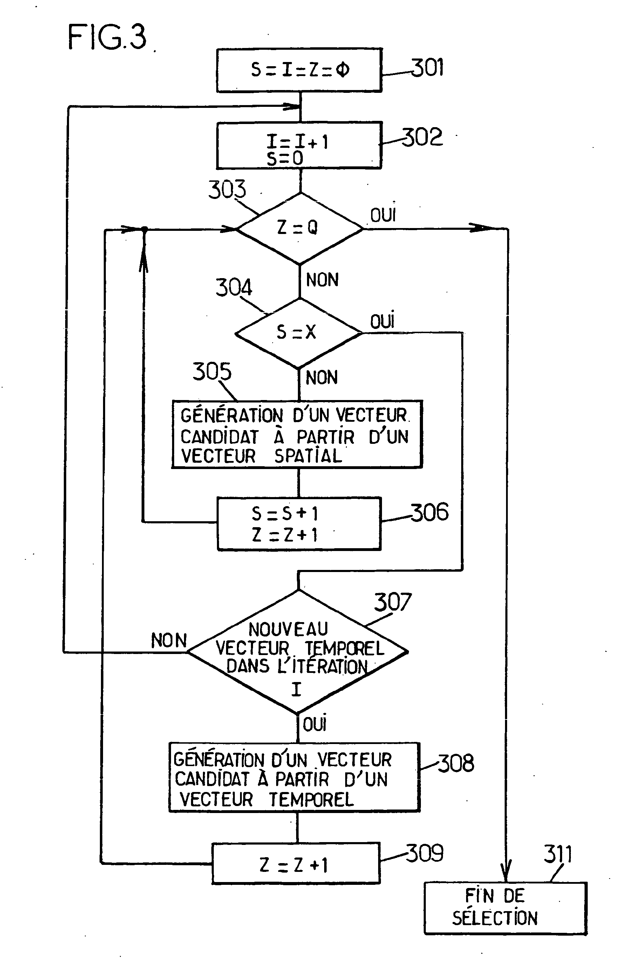

La figure 3 illustre un organigramme de la génération de vecteurs de mouvement candidats de l'image en cours de traitement selon un mode de mise en oeuvre de la présente invention. La génération est réalisée en générant dans une première étape des vecteurs candidats à partir de vecteurs de mouvement spatiaux, puis en générant dans une seconde étape des vecteurs candidats à partir de vecteurs de mouvement temporels, puis le cas échéant, en réitérant ces deux étapes. Un compteur I correspond au nombre d'itération de ces deux étapes de génération. Un compteur Z correspond au nombre de vecteurs de mouvement candidats déjà générés. Un compteur S correspond au nombre de vecteurs candidats générés à partir de vecteurs de mouvement spatiaux au cours d'une itération des étapes de génération.

On initialise les compteurs S, I et Z à zéro (étape 301). Puis on réinitialise le compteur S et on incrémente de 1 le compteur d'itération des étapes de sélection (étape 302).

On génère dans la première étape (étape 305), un nombre déterminé X de vecteurs candidats à partir de vecteurs de mouvement spatiaux candidats (étape 304 et 305). On incrémente de 1 le compteur Z de vecteurs de mouvement candidats générés (étape 306).

Puis, dans la deuxième étape de génération, tant que cela est possible (étape 307), on sélectionne des vecteurs de mouvement temporels pertinents dans un ensemble de vecteurs de mouvement temporels préalablement défini (étape 308), en incrémentant respectivement le compteur Z des vecteurs de mouvement candidats générés (étape 309). Les vecteurs de mouvement temporels sont sélectionnés s'ils satisfont un critère de pertinence lié à leur orientation, pour générer des vecteurs de mouvement candidats (étape 307). Cette deuxième étape de génération est réalisée tant que le nombre total de vecteurs de mouvement candidats déjà générés, c'est-à-dire la somme du nombre de vecteurs candidats générés à partir de vecteurs de mouvement spatiaux et du nombre de vecteurs candidats générés à partir de vecteurs de mouvement temporels est inférieur ou égal au nombre déterminé Q (étape 306).

Si à l'issue de la deuxième étape (310) le nombre total de vecteurs de mouvement candidats générés est strictement inférieur au nombre déterminé Q, on réitère de préférence tout ou partie de la première étape. On incrémente le compteur 1 de 1 et on initialise le compteur S à 0 (étape 302). Puis, on génère des vecteurs de mouvement candidats à partir de vecteurs spatiaux (étape 305). Dans un mode préféré de la présente invention, dans la première étape de génération réitérée, de numéro d'itération I, on génère des vecteurs de mouvement candidats à partir des vecteurs de mouvements candidats déjà générés dans la première étape de génération de l'itération précédente, de numéro d'itération I-1. Dans un autre mode de réalisation de l'invention, on génère des vecteurs de mouvement candidats à partir des vecteurs spatiaux déjà sélectionnés dans l'itération précédente de cette première étape de génération. La première étape de génération est interrompue dès qu'un nombre de vecteurs de mouvement candidats égal à Q est atteint (étape 303).

Si à la fin de la première étape de la seconde itération, le nombre déterminé Q de vecteurs de mouvement candidats n'est toujours pas atteint, dans un mode de réalisation préféré de l'invention, dans un mode préféré de réalisation de l'invention, on génère des vecteurs de mouvement candidats à partir des vecteurs de mouvement candidats déjà générés à partir de vecteurs de mouvement temporels. Dans un autre mode de réalisation de l'invention, on génère des vecteurs candidats à partir des vecteurs de mouvements temporels déjà sélectionnés dans l'itération précédente de cette première étape de génération. Et ainsi de suite.

Ce principe de réitération des premières et secondes étapes de sélection s'applique comme décrit précédemment jusqu'à ce que le nombre de vecteurs de mouvement candidats soit égal à Q.

Dans un mode de réalisation de la présente invention, on traite les vecteurs de mouvement, spatiaux et temporels, sélectionnés ainsi que les vecteurs candidats déjà sélectionnés, pour générer les vecteurs candidat. Dans un mode de réalisation de l'invention, le traitement consiste à ajouter un vecteur aléatoire à chaque vecteur sélectionné, qu'il soit un vecteur de mouvement spatial, un vecteur de mouvement temporel ou encore un vecteur candidat déjà sélectionné dans une itération précédente de la première ou de la deuxième des étapes de génération, afin de générer un vecteur candidat permettant d'assurer une diversité des vecteurs candidats.

Dans un mode de mise en oeuvre préféré de la présente invention, le critère de sélection appliqué aux vecteurs de mouvement temporels dans le cas de l'exemple illustré à la figure 6 est décrit ci après, où Vix désigne la composante horizontale et Viy désigne la composante verticale d'un vecteur de mouvement Vi, avec 1 ≤i ≤25.
V1 est sélectionné si Min(V1x,V1y)≥0
V2 est sélectionné si Min(V2x,V2y) ≥0
V3 est sélectionné si V3y ≥0
V4 est sélectionné si Min(-V4x,V4y) ≥0
V5 est sélectionné si Min(-V5x,V5y) ≥0
V6 est sélectionné si Min(V6x,V6y) ≥0
V7 est sélectionné si Min(V7x,V7y) ≥0
V8 est sélectionné si V8y ≥0
V9 est sélectionné si Min(V9x,-V9y) ≤0
V 10 est sélectionné si Min(-V10x,V10y) ≥0
V11 est sélectionné si V11x ≥0
V12 est sélectionné si V12x ≥0
V13 est sélectionné si Max(Abs(V13x), Abs(V13y)) ≤Larg(block)
V14 est sélectionné si Vt14x ≤0
V15 est sélectionné si V15x ≤0
V16 est sélectionné si Min(V16x,-V16y) ≥0
V17 est sélectionné si Max(V17x,-V17y) ≥0
V18 est sélectionné si V18y ≤0
V19 est sélectionné si Min(V19x,V19y) ≤0
V20 est sélectionné si Max(V20x,V20y) ≤0
V21 est sélectionné si Min (V21 x,-V21 y) ≤0
V22 est sélectionné si Min(V22x,-V22y) ≤0
V23 est sélectionné si V23y ≤0
V24 est sélectionné si Max(V24x,V24y) ≤0
V25 est sélectionné si Max(V25x,V25y) ≤0
où
Min(a,b) représente la plus petite valeur de a ou b ;
Max(a,b) représente la plus grande valeur de a ou b ;
Abs(a) représente la valeur absolue de a ;
Larg(block) représente la largeur constante d'un bloc de pixels.

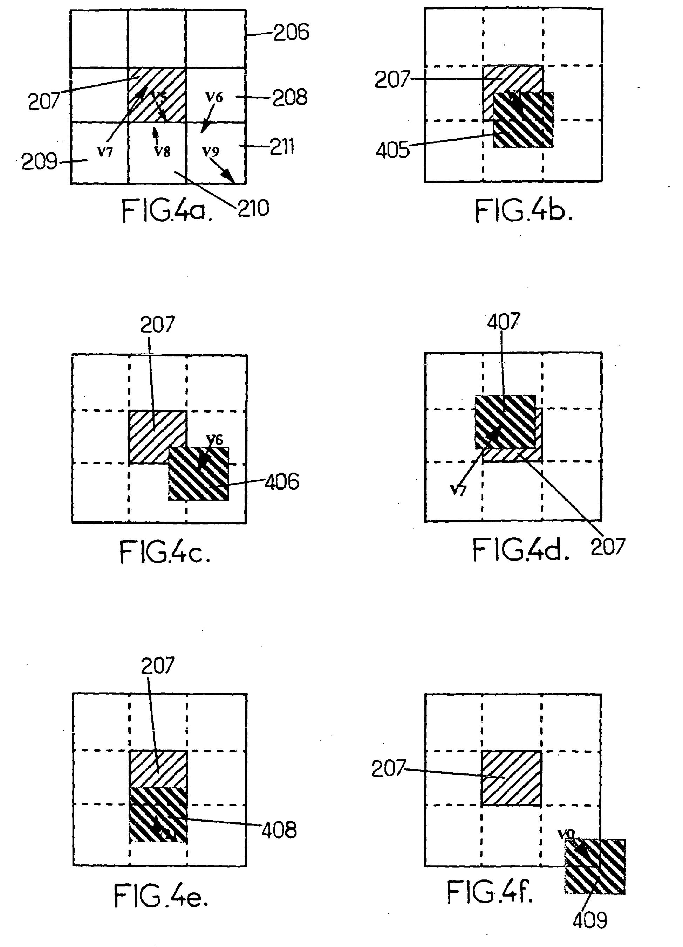

Les figures 4a à 4f illustrent la sélection d'un ensemble de vecteurs de mouvement selon un exemple de mise en oeuvre de la présente invention.

Sur les figures 4a-4f, la fenêtre de recherche 206 dans l'image traitée précédente comprend les blocs 207, 208, 209, 210 et 211 auxquels les vecteurs de mouvement V5, V6, V7, V8 et V9 sont respectivement associés.

La figure 4b illustre la superposition du bloc courant 207 et du bloc 405 qui représente le résultat de la translation vectorielle du bloc candidat 207 selon le vecteur de mouvement V5. Les deux blocs 207 et 405 se recouvrant sur une partie sensiblement égale à une moitié de la surface d'un bloc, le vecteur de mouvement V5 sélectionné comme vecteur de mouvement candidat s'avère être plutôt pertinent.

La figure 4c illustre la superposition du bloc courant 207 et du bloc 406 qui représente le résultat de la translation vectorielle du bloc candidat 208 selon le vecteur de mouvement associé V6. Les deux blocs 207 et 406 se recouvrant sur une partie sensiblement égale au neuvième de la surface d'un bloc, le vecteur de mouvement sélectionné V6 s'avère être un vecteur relativement pertinent pour le bloc courant 207.

La figure 4d illustre la superposition du bloc courant 207 et du bloc 407 qui représente le résultat de la translation vectorielle du bloc candidat 209 selon le vecteur de mouvement V7. Les deux blocs 207 et 407 se recouvrant sur une partie sensiblement égale au 9/10 ème de la surface d'un bloc, le vecteur de mouvement candidat V7 est très pertinent.

La figure 4e illustre la superposition du bloc courant 207 et du bloc 408 qui représente le résultat de la translation vectorielle du bloc candidat 210 selon le vecteur de mouvement V8. Les deux blocs 207 et 408 se recouvrant sur une partie sensiblement égale à la moitié de la surface d'un bloc, le vecteur V8 s'avère être relativement pertinent.

La figure 4f illustre la superposition du bloc courant 207 et du bloc 409 qui représente le résultat de la translation vectorielle du bloc candidat 211 selon le vecteur de mouvement V9. Les blocs 207 et 409 ne se recouvrent absolument pas : le vecteur de mouvement candidat V9 n'est pas pertinent.

Les figures 5a et 5b illustrent la mise en oeuvre de la présente invention dans un exemple où un seul vecteur de mouvement temporel dans la fenêtre de recherche 500 est sélectionné en tant que vecteur de mouvement temporel candidat et est donc pertinent. Ainsi l'ensemble des blocs 500 est compris dans l'image traitée précédente, les blocs 501, 502, 503, 504, 505, 506, 507, 508 et 509 étant respectivement associés à des vecteurs de mouvement respectifs V1, V2, V3, V4, V5, V6, V7, V8 et V9. La figure 5b illustre les blocs 511, 512, 513, 514, 515, 516, 517, 518 et 519, correspondants à la translation des blocs candidats temporels selon leur vecteur de mouvement associé respectif. Seul le vecteur de mouvement V5 est pertinent.

De plus, un vecteur de mouvement associé à un bloc de pixels donné représente en fait le mouvement de chaque pixel du bloc de manière approximative d'une image à une autre, puisque tous les pixels d'un même bloc n'ont pas exactement le même mouvement. Dans un mode de réalisation de l'invention, afin d'augmenter la précision des images interpolées obtenues à partir des images traitées, dans le cas où l'application concerne une conversion de débit d'images, un bloc de pixels est lui-même divisé en plusieurs sous-blocs de pixels et un vecteur de mouvement corrigé est calculé pour chaque sous-bloc. Les vecteurs de mouvement corrigé d'un sous-bloc sont calculés en fonction du vecteur de mouvement du bloc respectif et de vecteurs de mouvement d'un ou de blocs ou sous-blocs de pixels voisins.

En pratique, des performances satisfaisantes du procédé de sélection selon l'invention sont obtenues en fixant à 16 ou 32 le nombre Q de vecteurs de mouvement candidats, à 4 le nombre de vecteurs de mouvement spatiaux disponibles tel que défini ci-dessus et à 9 ou 25 le nombre de vecteurs de mouvements temporels disponibles tel que défini ci-dessus.

Dans un mode de réalisation de l'invention, l'image traitée est interpolée par détermination des valeurs des pixels du bloc courant en fonction des valeurs des pixels pointés par le vecteur de mouvement élu dans l'image d'origine précédente à partir des positions des pixels du bloc de pixels courant à interpoler et/ou des valeurs des pixels pointés par le vecteur de mouvement élu dans l'image d'origine suivante à partir des positions des pixels du bloc de pixels courant à interpoler.

Dans ce cas, le bloc de pixel peut être divisé en une pluralité de sous-blocs de pixels. L'étape de détermination des valeurs de pixels peut alors comprendre, pour chaque sous-bloc d'un bloc courant, les étapes de :
- calcul de vecteur de mouvement corrigé relatif au sous-bloc à partir du vecteur de mouvement élu du bloc courant et d'au moins un vecteur de mouvement élu d'un bloc ou sous-bloc voisin ;
- association dudit vecteur de mouvement corrigé audit sous-bloc ;
- détermination des valeurs de pixels dudit sous-bloc en en fonction des valeurs des pixels pointés par ledit vecteur de mouvement corrigé dans l'image d'origine précédente à partir des positions des pixels dudit sous-bloc de pixels à interpoler et/ou des valeurs des pixels pointé par ledit vecteur de mouvement corrigé dans l'image d'origine suivante à partir des positions des pixels dudit sous-bloc de pixels à interpoler.

Dans un mode de réalisation de la présente invention, les vecteurs de mouvement temporels sont sélectionnés à partir d'un ensemble qui comprend des vecteurs de mouvement temporels correspondant respectivement à des blocs de pixels de l'image traitée précédente dont les positions sont prédéterminées et fixées relativement à la position du bloc de pixels courant de l'image en cours de traitement, ledit ensemble formant un ensemble de blocs de pixels autour du bloc de pixels courant.

L'étape d'élection, selon un mode de réalisation de l'invention, peut être réalisée par les étapes suivantes :
- pour chacun des vecteurs de mouvement candidats, calcul d'une erreur basé sur la corrélation entre les valeurs des pixels d'un premier bloc de pixels pointé par ledit vecteur de mouvement candidat donné dans l'image d'origine précédente à partir des positions des pixels du bloc de pixels courant à traiter et/ou les valeurs de pixels d'un second bloc de pixels pointé par ledit vecteur de mouvement candidat donné dans l'image d'origine suivante à partir des positions des pixels du bloc de pixels courant à traiter;
- élection du vecteur de mouvement candidats pour lequel ladite erreur est la plus faible.

L'invention permet de réduire significativement la complexité des calculs et permet un meilleur rendu de l'image en ce qui concerne les mouvements rapides et une meilleure homogénéité de performance dans la séquence des images. Elle peut avantageusement mise en oeuvre dans des systèmes tels que définis en introduction en améliorant le rendu des images.

## Revendications

1. Procédé d'estimation de mouvement pour traiter des images destinées à s'insérer chacune entre une image d'origine précédente et une image d'origine suivante dans une séquence d'images déterminées, chaque image étant divisée en une pluralité de blocs de pixels, un vecteur de mouvement étant associé à chacun des blocs de pixels d'une image traitée, le procédé comprenant pour un bloc courant d'une image en cours de traitement, les étapes de:
- sélection de vecteurs de mouvement associés à des blocs de pixels respectifs de l'image en cours de traitement et de vecteurs de mouvement associés à des blocs de pixels respectifs d'une image traitée précédente, respectivement appelés vecteurs de mouvement spatiaux et vecteurs de mouvement temporels ;
- génération de vecteurs de mouvement candidats à partir desdits vecteurs de mouvement sélectionnés ;
- élection d'un vecteur de mouvement parmi lesdits vecteurs de mouvement candidats;
- mémorisation d'une information associant ledit vecteur de mouvement élu au bloc de pixels courant;
le procédé étant **caractérisé en ce qu'**un vecteur de mouvement temporel n'est sélectionné que si il satisfait un critère de sélection déterminé basé sur l'orientation dudit vecteur de mouvement.

2. Procédé selon la revendication 1, suivant lequel, à l'étape de sélection, on sélectionne les vecteurs de mouvement temporels candidats qui rapprochent du bloc courant les blocs de pixel auquel ils sont respectivement associés.

3. Procédé selon la revendication 1 ou 2, dans lequel l'image traitée est interpolée par :
- détermination des valeurs des pixels du bloc courant en fonction des valeurs des pixels pointés par le vecteur de mouvement élu dans l'image d'origine précédente à partir des positions des pixels du bloc de pixels courant à interpoler et/ou des valeurs des pixels pointés par le vecteur de mouvement élu dans l'image d'origine suivante à partir des positions des pixels du bloc de pixels courant à interpoler;

4. Procédé selon la revendication 3, dans lequel le bloc de pixel est divisé en une pluralité de sous-blocs de pixels et dans lequel l'étape de détermination des valeurs de pixels comprend, pour chaque sous-bloc d'un bloc courant, les étapes de :
- calcul de vecteur de mouvement corrigé relatif au sous-bloc à partir du vecteur de mouvement élu du bloc courant et d'au moins un vecteur de mouvement élu d'un bloc ou sous-bloc voisin ;
- association dudit vecteur de mouvement corrigé audit sous-bloc ;
- détermination des valeurs de pixels dudit sous-bloc en en fonction des valeurs des pixels pointés par ledit vecteur de mouvement corrigé dans l'image d'origine précédente à partir des positions des pixels dudit sous-bloc de pixels à interpoler et/ou des valeurs des pixels pointé par ledit vecteur de mouvement corrigé dans l'image d'origine suivante à partir des positions des pixels dudit sous-bloc de pixels à interpoler.

5. Procédé selon l'une quelconque des revendications précédentes, suivant lequel les vecteurs de mouvement temporels sont sélectionnés à partir d'un ensemble qui comprend des vecteurs de mouvement temporels correspondant respectivement à des blocs de pixels de l'image traitée précédente dont les positions sont prédéterminées et fixées relativement à la position du bloc de pixels courant de l'image en cours de traitement, ledit ensemble formant un ensemble de blocs de pixels autour du bloc de pixels courant.

6. Procédé selon l'une quelconque des revendications précédentes, suivant lequel on sélectionne un nombre déterminé Q de vecteurs de mouvement candidats par les étapes suivantes :
a) génération d'un nombre déterminé X de vecteurs candidats a partir de vecteurs de mouvement spatiaux, X étant inférieur au nombre de vecteurs de mouvement candidats restant à sélectionner pour le bloc de pixels courant ;
b) génération de vecteurs candidats a partir de vecteurs de mouvements temporels qui satisfont le critère de sélection tant que le nombre de vecteurs de mouvement candidats déjà générés est inférieur ou égal à Q ;
c) le cas échéant, répétition des étapes a et b successivement jusqu'à ce que le nombre de vecteurs de mouvement candidats sélectionnés soir égal à Q.

7. Procédé selon l'une quelconque des revendications précédentes, suivant lequel on sélectionne un nombre déterminé Q de vecteurs de mouvement candidats par les étapes suivantes :
a) génération d'un nombre déterminé X de vecteurs candidats à partir de vecteurs de mouvement spatiaux, X étant inférieur au nombre de vecteurs de mouvement candidats restant à sélectionner pour le bloc de pixels courant ;
b) génération de vecteurs candidats à partir de vecteurs de mouvements temporels qui satisfont le critère de sélection tant que le nombre de vecteurs de mouvement candidats déjà générés est inférieur ou égal à Q ;
c) le cas échéant, génération de vecteurs candidats à partir de vecteurs candidats déjà générés dans les étapes a et b jusqu'à ce que le nombre de vecteurs de mouvement candidats générés soit égal à Q.

8. Procédé selon l'une quelconque des revendications précédentes, dans lequel l'élection est réalisée par les étapes suivantes :
- pour chacun des vecteurs de mouvement candidats, calcul d'une erreur basé sur la corrélation entre les valeurs des pixels d'un premier bloc de pixels pointé par ledit vecteur de mouvement candidat donné dans l'image d'origine précédente à partir des positions des pixels du bloc de pixels courant à traiter et/ou les valeurs de pixels d'un second bloc de pixels pointé par ledit vecteur de mouvement candidat donné dans l'image d'origine suivante à partir des positions des pixels du bloc de pixels courant à traiter;
- élection du vecteur de mouvement candidats pour lequel ladite erreur est la plus faible.

9. Dispositif d'estimation de mouvement pour traiter des images destinées à s'insérer chacune entre une image d'origine précédente et une image d'origine suivante dans une séquence d'images déterminées, chaque image étant divisée en une pluralité de blocs de pixels, un vecteur de mouvement étant associé à chacun des blocs de pixels d'une image traitée, le dispositif comprenant pour un bloc courant d'une image en cours de traitement:
- une unité de sélection pour sélectionner des vecteurs de mouvement associés à des blocs de pixels respectifs de l'image en cours de traitement et de vecteurs de mouvement associés à des blocs de pixels respectifs d'une image traitée précédente, respectivement appelés vecteurs de mouvement spatiaux et vecteurs de mouvement temporels ;
- une unité de génération pour générer des vecteurs de mouvement candidats à partir desdits vecteurs de mouvement sélectionnés ;
- une unité d'élection pour élire un vecteur de mouvement parmi lesdits vecteurs de mouvement candidats;
- une mémoire pour mémoriser une association dudit vecteur de mouvement élu au bloc de pixels courant;
le dispositif étant **caractérisé en ce qu'**un vecteur de mouvement temporel n'est sélectionné que si il satisfait un critère de sélection déterminé basé sur l'orientation dudit vecteur de mouvement.

10. Dispositif selon la revendication 9, dans lequel l'unité de sélection sélectionne les vecteurs de mouvement temporels candidats qui rapprochent le bloc de pixel auquel il est associé du bloc courant.

11. Dispositif selon la revendication 9 ou 10, comprenant en outre une unité de détermination pour déterminer des valeurs des pixels du bloc courant en fonction des valeurs des pixels pointés par le vecteur de mouvement élu dans l'image d'origine précédente à partir des positions des pixels du bloc de pixels courant à interpoler et/ou des valeurs des pixels pointé par le vecteur de mouvement élu dans l'image d'origine suivante à partir des positions des pixels du bloc de pixels courant à interpoler;

12. Dispositif selon l'une quelconque des revendications 9 à 11, dans lequel l'unité de sélection est adaptée pour sélectionner les vecteurs de mouvement temporels à partir d'un ensemble qui comprend des vecteurs de mouvement temporels correspondant respectivement à des blocs de pixels de l'image traitée précédente dont les positions sont prédéterminées et fixées relativement à la position du bloc de pixels courant de l'image en cours de traitement, ledit ensemble formant un ensemble de blocs de pixels autour du bloc de pixels courant.

13. Dispositif selon l'une quelconque des revendications 9 à 12, dans lequel l'unité de sélection est adaptée pour sélectionner un nombre déterminé Q de vecteurs de mouvement candidats par les opérations suivantes :
d) génération d'un nombre déterminé X de vecteurs candidats à partir de vecteurs de mouvement spatiaux, X étant inférieur au nombre de vecteurs de mouvement candidats restant à sélectionner pour le bloc de pixels courant ;
e) génération de vecteurs candidats à partir de vecteurs de mouvements temporels qui satisfont le critère de sélection tant que le nombre de vecteurs de mouvement candidats déjà générés est inférieur ou égal à Q ;
f) le cas échéant, génération de vecteurs candidats à partir de vecteurs candidats déjà générés dans les étapes a et b jusqu'à ce que le nombre de vecteurs de mouvement candidats générés soit égal à Q.

14. Dispositif selon l'une quelconque des revendications 9 à 13, dans lequel l'unité d'élection est adaptée pour réaliser les opérations suivantes :
- pour chacun des vecteurs de mouvement candidats, calcul d'une erreur basé sur la corrélation entre les valeurs des pixels d'un premier bloc de pixels pointé par ledit vecteur de mouvement candidat donné dans l'image d'origine précédente à partir des positions des pixels du bloc de pixels courant à traiter et/ou les valeurs de pixels d'un second bloc de pixels pointé par ledit vecteur de mouvement candidat donné dans l'image d'origine suivante à partir des positions des pixels du bloc de pixels courant à traiter;
- élection du vecteur de mouvement candidats pour lequel ladite erreur est la plus faible.

15. Produit « programme d'ordinateur » chargeable directement dans la mémoire interne d'un ordinateur numérique, comprenant des portions de code de logiciel pour l'exécution des étapes du procédé selon l'une quelconque des revendications 1 à 8 lorsque ledit programme est exécuté dans l'ordinateur.

## Claims

1. Motion estimation method for processing images each intended to be inserted between a preceding original image and a following original image, in a sequence of determined images, each image being divided into a plurality of pixels blocks, a motion vector being associated with each of the pixels blocks of a processed image, the method comprising, for a current block of an image being processed, the following steps:
- selection of motion vectors associated with respective pixels blocks of the image being processed and of motion vectors associated with respective pixels blocks of a preceding processed image, called spatial motion vectors and temporal motion vectors respectively;
- generation of candidate motion vectors from said selected motion vectors;
- election of a motion vector among said candidate motion vectors; and
- storage of information associating said elected motion vector with the current pixels block;
said method being **characterized by** a temporal motion vector is selected only if it satisfies a determined selection criterion based on the orientation of said motion vector.

2. Method according to Claim 1, wherein, at the selection step, the candidate temporal motion vectors which bring the pixels blocks with which they are respectively associated close to the current block are selected.

3. Method according to Claim 1 or 2, wherein the processed image is interpolated by:
- determining the values of the pixels of the current block according to the values of the pixels in the preceding original image that are indicated by the elected motion vector from the positions of the pixels of the current pixels block to be interpolated and/or according to the values of the pixels in the following original image that are indicated by the elected motion vector from the positions of the pixels of the current pixels block to be interpolated.

4. Method according to Claim 3, wherein the pixels block is divided into a plurality of pixel sub-blocks and wherein the step of determining the pixel values comprises, for each sub-block of a current block, the steps of:
- calculating a corrected motion vector relative to the sub-block on the basis of the elected motion vector of the current block and of at least one elected motion vector of a neighbouring block or sub-block;
- associating said corrected motion vector with said sub-block; and
- determining values of the pixels of said sub-block according to the values of the pixels in the preceding original image that are indicated by said corrected motion vector from the positions of the pixels of said pixel sub-block to be interpolated and/or according to the values of the pixels in the following original image that are indicated by said corrected motion vector from the positions of the pixels of said pixel sub-block to be interpolated.

5. Method according to any one of the preceding claims, wherein the temporal motion vectors are selected from a set that comprises temporal motion vectors corresponding to respective pixels blocks of the preceding processed image, the positions of which are determined and fixed relative to the position of the current pixels block of the image being processed, said set forming a set of pixels blocks around the current pixels block.

6. Method according to any one of the preceding claims, wherein the specified number Q of candidate motion vectors is selected by the following steps:
a) generation of a specified number X of candidate vectors from spatial motion vectors, X being less than the number of candidate motion vectors remaining to be selected in respect of the current pixels block;
b) generation of candidate vectors from temporal motion vectors that satisfy the selection criterion as long as the number of candidate motion vectors already generated is less than or equal to Q; and
c) where appropriate, repetition of steps a and b in succession until the number of selected candidate motion vectors is equal to Q.

7. Method according to any one of the preceding claims, wherein the specified number Q of candidate motion vectors is selected by the following steps:
a) generation of a specified number X of candidate vectors from spatial motion vectors, X being less than the number of candidate motion vectors remaining to be selected in respect of the current pixels block;
b) generation of candidate vectors from temporal motion vectors that satisfy the selection criterion as long as the number of candidate motion vectors already generated is less than or equal to Q; and
c) where appropriate, generation of candidate vectors from candidate vectors already generated in steps a and b until the number of candidate motion vectors generated is equal to Q.

8. Method according to any one of the preceding claims, wherein the election is made by the following steps:
- for each of the candidate motion vectors, calculation of an error based on the correlation between the values of the pixels of a first pixels block given in the preceding original image that are indicated by said candidate motion vector from the positions of the pixels of the current pixels block to be processed and/or the values of the pixels of a second pixels block given in the following original image indicated by said candidate motion vector from the positions of the pixels of the current pixels block to be processed; and
- election of the candidate motion vector for which said error is the smallest.

9. Motion estimation device for processing images each intended to be inserted between a preceding original image and a following original image in a sequence of determined images, each image being divided into a plurality of pixels blocks, a motion vector being associated with each of the pixels blocks of a processed image, the device comprising, in respect of a current block of an image being processed:
- a selection unit for selecting motion vectors associated with respective pixels blocks of the image being processed and for selecting motion vectors associated with respective pixels blocks of a preceding processed image, called spatial motion vectors and temporal motion vectors respectively;
- a generation unit for generating candidate motion vectors from said selected motion vectors;
- an election unit for electing a motion vector among said candidate motion vectors; and
- a memory for storing an association of said elected motion vector with the current pixels block;
said device being **characterized by** a temporal motion vector is selected only if a determined selection criterion based on the orientation of said motion vector is satisfied.

10. Device according to Claim 9, wherein the selection unit selects the candidate temporal motion vectors that bring the pixels block with which it is associated close to the current block.

11. Device according to Claim 9 or 10, which furthermore includes a determination unit for determining values of the pixels of the current block according to the values of the pixels in the preceding original image that are indicated by the elected motion vector from the positions of the pixels of the current pixels block to be interpolated and/or according to the values of the pixels in the following original image that are indicated by the elected motion vector from the positions of the pixels of the current pixels block to be interpolated.

12. Device according to any one of Claims 9 to 11, wherein the selection unit is designed to select the temporal motion vectors from a set that includes temporal motion vectors corresponding respectively to pixels blocks of the preceding processed image, the positions of which are determined and fixed relative to the position of the current pixels block of the image being processed, said set forming a set of pixels blocks around the current pixels block.

13. Device according to any one of Claims 9 to 12, wherein the selection unit is designed to select a specified number Q of candidate motion vectors by the following operations:
d) generation of a specified number X of candidate vectors from spatial motion vectors, X being less than the number of candidate motion vectors remaining to be selected in respect of the current pixels block;
e) generation of candidate vectors from temporal motion vectors that satisfy the selection criterion as long as the number of candidate motion vectors already generated is less than or equal to Q; and
f) where appropriate, generation of candidate vectors from candidate vectors already generated in steps a and b until the number of candidate motion vectors generated is equal to Q.

14. Device according to any one of Claims 9 to 13, wherein the election unit is designed to carry out the following operations:
- for each of the candidate motion vectors, calculation of an error based on the correlation between the values of the pixels of a first pixels block given in the preceding original image that are indicated by said candidate motion vector from the positions of the pixels of the current pixels block to be processed and/or the values of the pixels of a second pixels block given in the following original image that are indicated by said candidate motion vector from the positions of the pixels of the current pixels block to be processed; and
- election of the candidate motion vector for which said error is the smallest.

15. "Computer program" product that can be loaded directly into the internal memory of a digital computer, comprising software code portions for executing steps of the method according to any one of Claims 1 to 8 when said program is run on the computer.

## Patentansprüche

1. Verfahren zur Bewegungsabschätzung für die Bildbearbeitung von Bildern, die dazu vorgesehen sind, um in einer bestimmten Bilderfolge sich jeweils zwischen ein vorangehendes Ursprungsbild und ein folgendes Ursprungsbild einzufügen, wobei jedes Bild in eine Vielzahl von Bildpunktblöcke unterteilt ist, wobei jedem Bildpunktblock eines verarbeiteten Bildes ein Bewegungsvektor zugewiesen ist, wobei das Verfahren für einen laufenden Block eines in Bearbeitung befindlichen Bildes folgende Schritte umfasst:
- Auswahl von jeweiligen zu Bildpunktblöcke des in Bearbeitung befindlichen Bildes zugeordneten Bewegungsvektoren und von jeweiligen zu Bildpunktblöcke eines vorangehenden bereits bearbeiteten Bildes zugeordneten Bewegungsvektoren, jeweils als räumliche Bewegungsvektoren und zeitliche Bewegungsvektoren bezeichnet ;
- Bildung aus den genannten ausgewählten Bewegungsvektoren von Kandidatenbewegungsvektoren;
- Wahl eines Bewegungsvektors unter den genannten Kandidatenbewegungsvektoren;
- Abspeicherung einer Information, welche den genannten gewählten Bewegungsvektor dem laufenden Bildpunktblock zuweist;
wobei das Verfahren **dadurch gekennzeichnet ist, dass** ein zeitlicher Bewegungsvektor nur dann ausgewählt wird, wenn er einem festgelegten Auswahlkriterium genügt, das auf die Ausrichtung des genannten Bewegungsvektors basiert.

2. Verfahren nach Anspruch 1, in welchem beim Auswahlschritt, die zeitlichen Kandidatenbewegungsvektoren ausgewählt werden, die an den laufenden Block die Bildpunktblöcke heranführen, welchen sie jeweils zugeordnet sind.

3. Verfahren nach Anspruch 1 oder 2, in welchem das bearbeitete Bild interpoliert wird durch
- Wertbestimmung der Bildpunktwerte des laufenden Blocks in Abhängigkeit von den Werten der vom im vorangehenden Ursprungsbild gewählten Bewegungsvektor aufgezeigten Vektoren, aufgrund der Bildpunktpositionen der Bildpunkte des vom laufenden zu interpolierenden Bildpunktblocks und/oder der Bildpunktwerte der vom im folgenden Ursprungbild gewählten Bewegungsvektor aufgezeigten Bildpunkte, aufgrund der Bildpunktpositionen des laufenden zu interpolierenden Bildpunktblocks.

4. Verfahren nach Anspruch 3, bei welchem der Bildpunktblock in eine Vielzahl von Teil-Bildpunktblöcken unterteilt ist und bei welchem der Bestimmungsschritt der Bildpunktwerte für jeden Teilblock eines laufenden Blocks folgende Schritte umfasst
- Berechnung des korrigierten Bewegungsvektors bezogen auf den Teilblock aufgrund des gewählten Bewegungsvektors im laufenden Block und mindestens eines gewählten Bewegungsvektors eines benachbarten Blocks oder Teilblocks;
- Zuordnung des genannten korrigierten Bewegungsvektors zum genannten Teilblock;
- Wertbestimmung der Bildpunktwerte des genannten Teilblocks in Abhängigkeit von den Bildpunktwerten der vom genannten, im vorangehenden Ursprungsbild korrigierten Bewegungsvektor aufgezeigten Bildpunkten aufgrund der Position der Bildpunkte des genannten zu interpolierenden Bildpunkt-Teilblocks und/oder der Bildpunktwerte der vom genannten im folgenden Ursprungsbild korrigierten Bewegungsvektors aufgezeigten Bildpunkte, aufgrund der Bildpunktpositionen der Bildpunkte des genannten zu interpolierenden Bildpunkt-Teilblocks.

5. Verfahren nach einem der vorangehenden Ansprüche, bei welchem die zeitlichen Bewegungsvektoren aus einer Gruppe ausgewählt werden, die zeitliche Bewegungsvektoren umfassen, die jeweils Bildpunktblöcke des vorangehenden bearbeiteten Bildes entsprechen, deren Positionen relativ zur Position des laufenden Bildpunktblocks des in Bearbeitung befindlichen Bildes vorbestimmt und festgelegt sind, wobei die genannte Gruppe um dem laufenden Bildpunktblock herum eine Bildpunktblockgruppe bildet.

6. Verfahren nach einem der vorangehenden Ansprüche, bei welchem eine bestimmte Vektorenanzahl Q von Kandidatenbewegungsvektoren durch folgende Schritte ausgewählt wird
a) Bildung einer festgelegten Vektorenanzahl X von Kandidatenvektoren aus räumlichen Bewegungsvektoren, wobei X kleiner ist als die Vektorenanzahl der für den laufenden Bildpunktblock noch auszuwählenden Kandidatenbewegungsvektoren;
b) Bildung von Kandidatenvektoren aus zeitlichen Bewegungsvektoren, die dem Auswahlkriterium genügen, solange die Anzahl der bereits erzeugten Bewegungsvektoren größer oder gleich Q ist;
c) ggf. aufeinanderfolgende Wiederholung der Schritte a und b, bis die Vektorenanzahl der ausgewählten Kandidatenbewegungsvektoren gleich Q ist.

7. Verfahren nach einem der vorangehenden Ansprüche, bei welchem eine bestimmte Vektorenanzahl Q von Kandidatenbewegungsvektoren durch folgende Schritte ausgewählt wird
a) Bildung einer bestimmten Vektorenanzahl X von Kandidatenvektoren aus räumlichen Bewegungsvektoren, wobei X kleiner ist als die Anzahl der im laufenden Bildpunktblock noch auszuwählenden Kandidatenbewegungsvektoren;
b) Bildung von Kandidatenvektoren aus zeitlichen Bewegungsvektoren die dem Auswahlkriterium genügen, solange die Anzahl der bereits erzeugten Kandidatenbewegungsvektoren kleiner oder gleich Q ist ;
c) ggf. Bildung von Kandidatenvektoren aus bereits in den Schritten a und b erzeugte Kandidatenvektoren, bis die Anzahl der gebildeten Kandidatenbewegungsvektoren gleich Q ist.

8. Verfahren nach einem der vorangehenden Ansprüche, bei welchem die Wahl durch folgende Schritte getroffen wird
- für jeden der Kandidatenbewegungsvektoren, Berechnung eines Fehler aufgrund der Wechselbeziehung zwischen den Bildpunktwerten eines ersten vom genannten im vorangehenden Ursprungsbild gegebenen Kandidatenbewegungsvektor aufgezeigten Bildpunktblocks, aus den Bildpunktpositionen des laufenden zu bearbeitenden Bildpunktblocks und/oder aus den Bildpunktwerte eines vom genannten im vorangehenden Ursprungsbild gegebenen Kandidatenbewegungsvektor aufgezeigten zweiten Bildpunktblocks, aus den Bildpunktpositionen des laufenden zu bearbeitenden Bildpunktblocks,
- Wahl des Kandidatenbewegungsvektors für welchen der genannte Fehler am geringsten ist.

9. Vorrichtung zur Bewegungsabschätzung für die Bildbearbeitung von Bildern, die dazu vorgesehen sind, um in einer bestimmten Bilderfolge sich jeweils zwischen ein vorangehendes Ursprungsbild und ein folgendes Ursprungsbild einzufügen, wobei jedes Bild in eine Vielzahl von Bildpunktblöcke unterteilt ist, wobei jedem Bildpunktblock eines verarbeiteten Bildes ein Bewegungsvektor zugeordnet ist, wobei das Verfahren für einen laufenden Block eines in Verarbeitung befindlichen Bildes:
- eine Auswahleinheit für die Auswahl von jeweiligen zu Bildpunktblöcken des in Bearbeitung befindlichen Bildes zugeordneten Bewegungsvektoren und von jeweiligen zu Bildpunktblöcken eines vorangehenden bereits bearbeiteten Bildes zugeordneten Bewegungsvektoren, jeweils als räumliche Bewegungsvektoren und zeitlichen Bewegungsvektoren bezeichnet;
- eine Bildungseinheit, um aus den genannten ausgewählten Bewegungsvektoren Kandidatenbewegungsvektoren zu bilden;
- eine Wahleinheit, um unter den genannten Kandidatenbewegungsvektoren einen Bewegungsvektor zu wählen;
- einen Speicher, zur Abspeicherung einer Zuordnung des genannten gewählten Bewegungsvektors zum vorangehenden Ursprungsbild, aufgrund der Bildpunktpositionen des laufenden Bildpunktblocks umfasst,
wobei die Vorrichtung **dadurch gekennzeichnet ist, dass** ein zeitlicher Bewegungsvektor nur dann ausgewählt wird, wenn er einem festgelegten Auswahlkriterium genügt, das auf die Ausrichtung des genannten Bewegungsvektors basiert.

10. Vorrichtung nach Anspruch 9, in welcher die Auswahleinheit die zeitlichen Kandidatenbewegungsvektoren auswählt, die an den laufenden Block den Bildpunktblock heranführen, welchem sie zugeordnet sind.

11. Vorrichtung nach Anspruch 9 oder 10, umfassend außerdem eine Bestimmungseinheit, um Bildpunktwerte des laufenden Blocks im Zusammenhang mit den von dem im vorangehenden Ursprungsbild gewählten Bewegungsvektors aufgezeigten Bildpunktwerten, aufgrund der Bildpunktpositionen der Bildpunkte des vom laufenden zu interpolierenden Bildpunktblocks und/oder Bildpunktwerte der vom im folgenden Ursprungbild gewählten Bewegungsvektor aufgezeigten Bildpunkte, aufgrund der Bildpunktpositionen des laufenden zu interpolierenden Bildpunktblocks zu bestimmen.

12. Vorrichtung nach einem der Ansprüche 9 bis 11, in welcher die Auswahleinheit in der Lage ist, die zeitlichen Bewegungsvektoren aus einer Gruppe auszuwählen, die zeitliche Bewegungsvektoren umfasst, die jeweils Bildpunktblöcke des vorangehenden bearbeiteten Bildes entsprechen, deren Positionen relativ zur Position des laufenden Bildpunktblocks des in Bearbeitung befindlichen Bildes vorbestimmt und festgelegt sind, wobei die genannte Gruppe um dem laufenden Bildpunktblock herum eine Bildpunktblockgruppe bildet.

13. Vorrichtung nach einem des Ansprüche 9 bis 12, in welcher die Auswahleinheit in der Lage ist, eine bestimmte Vektorenanzahl Q von Kandidatenbewegungsvektoren für die folgenden Vorgänge auszuwählen:
d) Bildung einer bestimmten Vektorenanzahl X von Kandidatenvektoren aus räumlichen Bewegungsvektoren, wobei X kleiner ist als die Anzahl der im laufenden Bildpunktblock noch auszuwählenden Kandidatenbewegungsvektoren;
e) Bildung von Kandidatenvektoren aus zeitlichen Bewegungsvektoren die dem Auswahlkriterium genügen, solange die Anzahl der bereits erzeugten Kandidatenbewegungsvektoren kleiner oder gleich Q ist;
f) ggf. Bildung von Kandidatenvektoren aus bereits in den Schritten a und b erzeugten Kandidatenvektoren, bis die Anzahl der erzeugten Kandidatenbewegungsvektoren gleich Q ist.

14. Vorrichtung nach einem der Ansprüche 9 bis 13, in welcher
die Auswahleinheit in der Lage ist, folgende Vorgänge auszuführen
- für jeden der Kandidatenbewegungsvektoren, Berechnung eines Fehler aufgrund der Wechselbeziehung zwischen den Bildpunktwerten eines ersten vom genannten im vorangehenden Ursprungsbild gegebenen Kandidatenbewegungsvektor aufgezeigten Bildpunktblocks, aus den Bildpunktpositionen des laufenden zu bearbeitenden Bildpunktblocks und/oder der Bildpunktwerte eines vom genannten im vorangehenden Ursprungsbild gegebenen Kandidatenbewegungsvektor aufgezeigten zweiten Bildpunktblocks, aus den Bildpunktpositionen des laufenden zu bearbeitenden Bildpunktblocks,
- Wahl des Kandidatenbewegungsvektors für welchen der genannte Fehler am geringsten ist.

15. Produkt "Computerprogramme", das unmittelbar in den internen Speicher eines digitalen Computers geladen werden kann, mit Softwarecodeabschnitten für die Ausführung der Verfahrensschritte nach einem der Ansprüche 1 bis 8, wenn das Programm im Computer ausgeführt wird.
